# EUROPEAN PATENT APPLICATION

(11) **EP 3 260 687 A1**
(43) Date of publication of application: **27.12.2017**
(21) Application number: 17163187.2
(22) Date of filing: 27.03.2017
(51) Int. Cl.: F02C 7/052, B01D 45/04

(54) **INLET PARTICLE SEPARATOR SYSTEM WITH PRE-CLEANER FLOW PASSAGE**

(30) Priority: 22.06.2016 US 201615189618
(71) Applicant: Honeywell International Inc., Morris Plains, NJ 07950 (US)
(72) Inventor: PEARSON, John Taylor, Morris Plains, NJ 07950 (US); JUDD, Zedic Daniel, Morris Plains, NJ 07950 (US); SHEORAN, Yogendra Yogi, Morris Plains, NJ 07950 (US); BOULDIN, Bruce Dan, Morris Plains, NJ 07950 (US); CHOU, David, Morris Plains, NJ 07950 (US); GUERRA, Eduardo, Morris Plains, NJ 07950 (US)
(74) Representative: Houghton, Mark Phillip

(57) **Abstract**

An inlet particle separator system includes a shroud section and a hub section that is at least partly surrounded by the shroud section. The hub section is spaced apart from the shroud section. The inlet particle separator system also includes a flow passageway with an air inlet defined between the hub section and the shroud section. The flow passageway branches downstream of the air inlet into a main passage and a pre-cleaner passage. The main passage is defined between the hub section and the shroud section. The pre-cleaner passage includes a pre-cleaner inlet and extends at least partially through the hub section. Furthermore, the system includes a splitter that divides the main passage into scavenge and engine flow paths. The pre-cleaner inlet is partly defined by a first surface of the hub section. The first surface faces substantially in an upstream direction toward the air inlet.

## Description

### STATEMENT REGARDING FEDERALLY SPONSORED RESEARCH OR DEVELOPMENT

This invention was made with Government support under W911W6-08-2-0001 awarded by the US Army. The Government has certain rights in the invention.

### TECHNICAL FIELD

The present disclosure generally relates to an inlet particle separator system for a vehicle engine, and more particularly relates to an inlet particle separator system with a pre-cleaner flow passage for improving fine particulate separation efficiency.

### BACKGROUND

During operation of a vehicle, such as an aeronautical vehicle, air is induced into an engine and, when mixed with a combustible fuel, is used to generate energy to propel or provide power to the vehicle. The induced air may contain undesirable particles, such as sand and dust, which may degrade engine components. In order to prevent or at least minimize such degradation, many vehicles use an inlet particle separator system, disposed upstream of the engine, to remove at least a portion of the undesirable particles. The inlet particle separator may be configured to direct flow of particulates away from the engine and to direct relatively clean air into the engine.

Furthermore, other desirable features and characteristics of the present disclosure will become apparent from the subsequent detailed description and the appended claims, taken in conjunction with the accompanying drawings and the foregoing technical field and background.

### BRIEF SUMMARY

In one embodiment, an inlet particle separator system for a vehicle engine includes a shroud section and a hub section. The hub section is at least partly surrounded by the shroud section. The hub section is spaced apart from the shroud section. The inlet particle separator system also includes a flow passageway with an air inlet defined between the hub section and the shroud section. The flow passageway branches downstream of the air inlet into a main passage and a pre-cleaner passage. The main passage is defined between the hub section and the shroud section. The pre-cleaner passage includes a pre-cleaner inlet and extends at least partially through the hub section. Furthermore, the inlet particle separator system includes a splitter that is disposed within the main passage, downstream of the pre-cleaner inlet. The splitter divides the main passage into a scavenge flow path and an engine flow path. The pre-cleaner inlet is partly defined by a first surface of the hub section. The first surface faces in an upstream direction substantially toward the air inlet.

In another embodiment, an inlet particle separator system for a vehicle engine includes a shroud section and a hub section that is at least partly surrounded by the shroud section. The hub section is spaced apart from the shroud section. The inlet particle separator system also includes a flow passageway with an air inlet defined between the hub section and the shroud section. The air inlet directs flow substantially along a first direction. The flow passageway branches downstream of the air inlet into a main passage and a pre-cleaner passage. The main passage is defined between the hub section and the shroud section. The pre-cleaner passage extends at least partially through the hub section. The inlet particle separator system further includes a splitter that is disposed within the main passage. The splitter divides the main passage into a scavenge flow path and an engine flow path. The pre-cleaner passage re-directs flow from the air inlet along a second direction. The second direction is transverse to the first direction.

In yet another embodiment, an inlet particle separator system for a vehicle engine includes a shroud section and a hub section that is at least partly surrounded by the shroud section. The hub section is spaced apart from the shroud section. The inlet particle separator system also includes a flow passageway with an air inlet defined between the hub section and the shroud section. The flow passageway branches downstream of the air inlet into a main passage and a pre-cleaner passage. The main passage is defined between the hub section and the shroud section, and the pre-cleaner passage includes a pre-cleaner inlet and extends at least partially through the hub section. Additionally, the inlet particle separator system also includes a splitter that is disposed within the main passage, downstream of the pre-cleaner inlet. The splitter divides the main passage into a scavenge flow path and an engine flow path. The pre-cleaner inlet is partly defined by a first surface of the hub section. The first surface faces in an upstream direction substantially toward the air inlet. The first surface re-directs flow from the air inlet at least eighty degrees (80°) outwardly in a radial direction.

Furthermore, other desirable features and characteristics of the inlet particle separator system will become apparent from the above background, the subsequent detailed description, and the appended claims, taken in conjunction with the accompanying drawings.

### BRIEF DESCRIPTION OF THE DRAWINGS

The present disclosure will hereinafter be described in conjunction with the following drawing figures, wherein like numerals denote like elements, and wherein:
FIG. 1 is a functional block diagram of an exemplary gas turbine engine;
FIG. 2 is a cross-sectional view of an exemplary inlet particle separator system that may be implemented in the gas turbine engine of FIG. 1, wherein the cross-section is taken along a longitudinal axis of the inlet particle separator system;
FIG. 3 is a cross-sectional view of the inlet particle separator system taken along the longitudinal axis according to various embodiments of the present disclosure;
FIG. 4 is a perspective view of a hub section of the gas turbine engine, which defines portions of the inlet particle separator system according to various embodiments of the present disclosure;
FIG. 5 is a cross-sectional view of the inlet particle separator system, which includes the hub section of FIG. 4, and which is sectioned along the line 5-5 of FIG. 4; and
FIG. 6 is a cross-sectional view of the inlet particle separator system taken along the line 5-5 of FIG. 4 according to various embodiments of the present disclosure.

### DETAILED DESCRIPTION

The following detailed description is merely exemplary in nature and is not intended to limit the present disclosure or the application and uses of the present disclosure. Furthermore, there is no intention to be bound by any theory presented in the preceding background or the following detailed description.

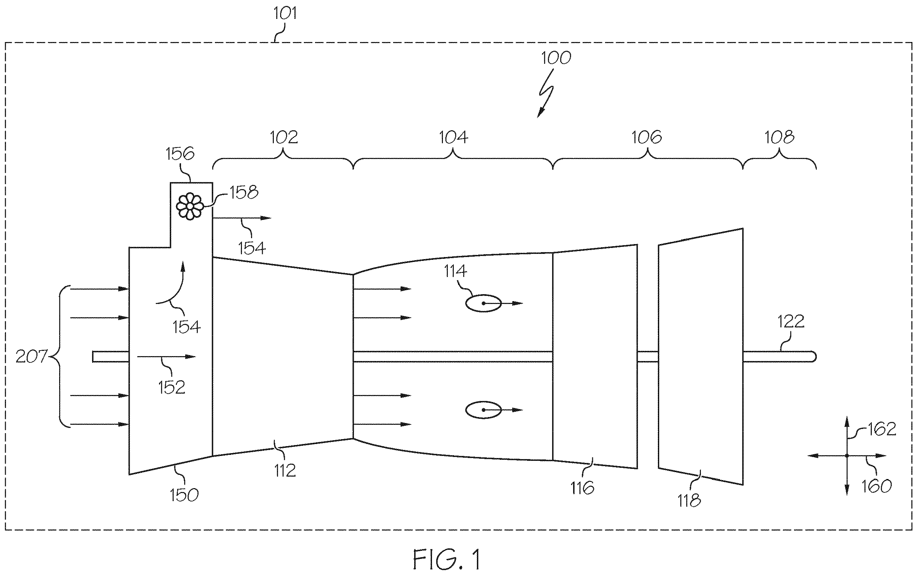

Turning now to FIG. 1, a functional block diagram of an exemplary gas turbine engine is depicted. The engine 100 may be included on a vehicle 101 of any suitable type, such as an aircraft, rotorcraft, marine vessel, train, or other vehicle, and the engine 100 can propel or provide auxiliary power to the vehicle. In other embodiments, the engine 100 may be included on a stationary object.

In some embodiments, the depicted engine 100 may be a single-spool turbo-shaft gas turbine propulsion engine, which includes a compressor section 102, a combustion section 104, a turbine section 106, and an exhaust section 108. The compressor section 102, which may include one or more compressors 112, draws air into the engine 100 and compresses the air to raise its pressure. In the depicted embodiment, only a single compressor 112 is shown, though it will be appreciated that one or more additional compressors could be used.

No matter the particular number of compressors 112 that are included in the compressor section 102, the compressed air is directed into the combustion section 104. In the combustion section 104, which includes a combustor assembly 114, the compressed air is mixed with fuel supplied from a non-illustrated fuel source. The fuel and air mixture is combusted in the combustion section 104, and the high energy combusted air mixture is then directed into the turbine section 106.

The turbine section 106 includes one or more turbines. In the depicted embodiment, the turbine section 106 includes two turbines: a high pressure turbine 116 and a low pressure turbine 118. However, it will be appreciated that the engine 100 could be configured with more or less than this number of turbines. No matter the particular number, the combusted air mixture from the combustion section 104 expands through each turbine 116, 118, causing it to rotate a power shaft 122. The combusted air mixture is then exhausted via the exhaust section 108. The power shaft 122 may be used to drive various devices within the engine or vehicle. For example, in the context of a helicopter, the power shaft may be used to drive one or more rotors.

As FIG. 1 further depicts, the gas turbine engine 100 also includes an inlet particle separator system 150. The inlet particle separator system 150 is coupled to, and disposed upstream of, the compressor section 102. The air that the compressor section 102 draws into the engine 100 first enters the inlet particle separator system 150. The inlet particle separator system 150, as will be described in more detail further below, is generally configured to separate the air that is drawn into the engine 100 into compressor inlet air 152 and scavenge air 154. The compressor inlet air 152 is drawn into the compressor section 102, and the scavenge air 154 is drawn into, for example, a scavenge scroll 156 via, for example, an air pump 158 (e.g., a blower or the like), and is then discharged into the atmosphere. The particle separator system 150 is additionally configured such that at least a portion of any particulate that is suspended in the air that is drawn into the engine 100 is separated therefrom and is discharged with the scavenge air 154. Thus, the compressor inlet air 152 that is drawn into the compressor section 102 is relatively clean, particulate-free air.

A longitudinal axis 160 and a radial axis 162 are included in FIG. 1 for reference purposes. As will be discussed, the engine 100 may include various passageways for the air to move along the longitudinal axis 160 and the radial axis 162. It will be appreciated that a "downstream direction" may be defined along the longitudinal axis 160 from the inlet particle separator system 150 generally toward the low pressure turbine 118, and an "upstream direction" may be defined along the longitudinal axis 160 opposite the "downstream direction". It will also be appreciated that an "outboard direction" may be defined along the radial axis 162, away from a centerline of the engine 100. Furthermore, it will be appreciated that an "inboard direction" may be defined along the radial axis 162, toward the centerline of the engine 100. It will be understood that these directions can be distinguished from each other by referring to one as a "first direction" and others as a "second direction," a "third direction," and so on.

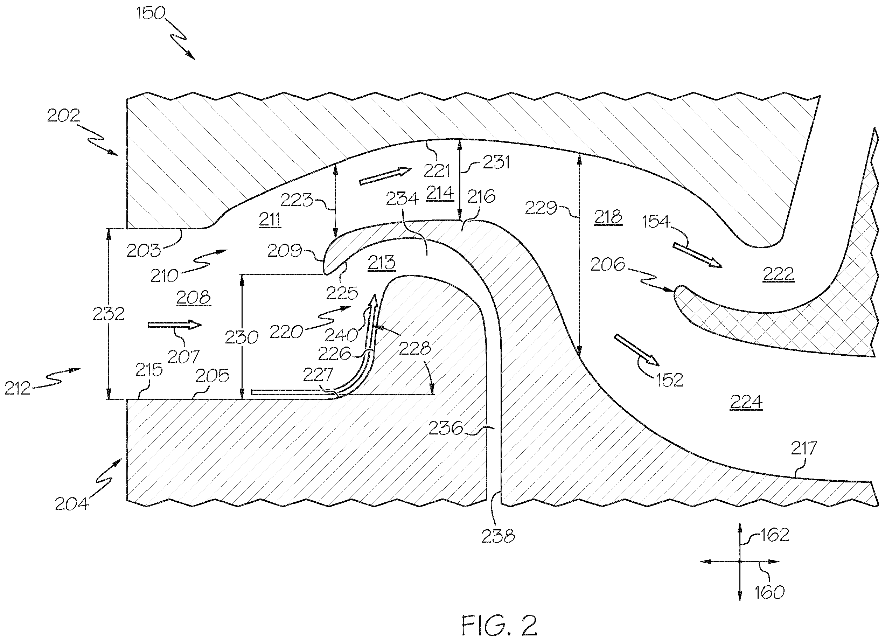

Referring now to FIG. 2, a cross section view of portions of the inlet particle separator system 150 is depicted and will be described according to exemplary embodiments of the present disclosure. The inlet particle separator system 150 may generally include a shroud section 202, a hub section 204, and a splitter 206. It will be appreciated that this cross section illustrates a representative portion of the inlet particle separator system 150. The shroud section 202, hub section 204, and/or splitter 206 may each be generally annular in shape and can be substantially symmetrical about the longitudinal axis 160

Thus hub section 204 will be discussed initially according to exemplary embodiments. The hub section 204 may be generally annular in shape and centered about the longitudinal axis 160. The hub section 204 can include an outer surface 205. In some embodiments, the hub section 204 may be substantially symmetrical with respect to the longitudinal axis 160. The diameter (measured along the radial axis 162) of the outer surface 205 can vary along the longitudinal axis 160. The hub section 204 may include an upstream portion 215, a downstream portion 217, and an intermediate portion 216 disposed between the upstream and downstream portions 215, 217, relative to the longitudinal axis 160. The intermediate portion 216 may have a greater diameter than both the upstream and downstream portions 215, 217.

The shroud section 202 may be generally annular in shape and centered about the longitudinal axis 160 so as to be substantially concentric with respect to the hub section 204. The shroud section 202 may surround at least a portion of the hub section 204. An inner surface 203 of the shroud section 202 may have a greater diameter than the outer surface 205 of the hub section 204 (measured along the radial axis 162). Thus, the shroud section 202 may be spaced apart from the hub section 204. In some embodiments, one or more struts or other support structures can extend between the shroud section 202 and the hub section 204 to maintain the separation between the shroud section 202 and the hub section 204. In some embodiments, the shroud section 202 may be made from the same materials as the hub section 204; however, in other embodiments, the shroud section 202 may be made from different materials than the hub section 204.

A flow passageway 208 may be defined between the shroud section 202 and the hub section 204. The flow passageway 208 may have an air inlet 212 defined between the shroud section 202 and the upstream portion 215 of the hub section 204. The air inlet 212 is configured to receive inlet air 207 that is drawn into the engine 100.

The flow passageway 208 may branch downstream of the air inlet 212 into a main passage 210 and at least one pre-cleaner passage 213. The main passage 210 may be defined between the outer surface 205 of the hub section 204 and the inner surface 203 of the shroud section 202, whereas the pre-cleaner passage 213 may extend at least partly through the hub section 204. In some embodiments, the pre-cleaner passage 213 may include a pre-cleaner inlet 220 defined within the intermediate portion 216 of the hub section 204. Downstream segments of the pre-cleaner passage 213 may extend through the intermediate portion 216 as will be discussed in detail below.

The main passage 210 of the flow passageway 208 may be sub-divided into a main passage inlet 211, a throat section 214, and a separation section 218. The main passage inlet 211 may be defined between the shroud section 202 and an outer lip 209 of the intermediate portion 216 of the hub section 204. The throat section 214 may be defined between a concave portion 221 of the inner surface 203 of the shroud section 202 and the intermediate portion 216 of the hub section 204. The separation section 218 may be defined between the shroud section 202 and the hub section 204, proximate the splitter 206. The shroud section 202 and the hub section 204 may be configured such that the cross sectional flow area of the main passage 210 increases gradually from the main passage inlet 211, through the throat section 214, and to the separation section 218. Specifically, a first cross sectional flow area 223 proximate the main passage inlet 211, a second cross sectional flow area 231 proximate the throat section 214, and a third cross sectional flow area 229 are indicated in FIG. 2. It will be appreciated that the first cross sectional flow area 223 may be less than the second cross sectional flow area 231, and that the second cross sectional flow area 231 may be less than the third cross sectional flow area 229. Also, the flow area can gradually increase along the longitudinal axis 160.

The separation section 218 is where the air that is drawn into the engine 100, and more specifically the air that is drawn into the air inlet 212, is separated into the compressor inlet air 152 and the scavenge air 154. The separation section 218 is also where the splitter 206 is disposed. The splitter 206 may be an annular member that is substantially symmetrical with respect to the longitudinal axis 160. The splitter 206 may also be concentric with both the shroud section 202 and the hub section 204. The splitter 206 may be attached to the shroud section 202 and/or the hub section 204. In some embodiments, the splitter 206 may be spaced apart from the shroud section 202 and the hub section 204 along the radial axis 162. In some embodiments, the splitter 206 may be integrally attached to the shroud section 202 so that the splitter 206 is unitary with other portions of the shroud section 202. In other embodiments, the splitter 206 is an independent part that is attached (e.g., via struts or other supporting structure) to the shroud section 202. Likewise, the splitter 206 can be integrally attached or removably attached to the hub section 204. The splitter 206 may be disposed within and may extend into the main passage 210, downstream of the air inlet 212, the pre-cleaner inlet 220, and the throat section 214. More specifically, the splitter 206 may be disposed within the separation section 218. The splitter 206 divides the main passage 210 into a scavenge flow path 222, into which the scavenge air 154 flows, and an engine flow path 224, into which the compressor inlet air 152 flows.

Air 207 that is drawn into the engine 100 may have particles entrained therein. The inlet particle separator 150 may be configured to prevent (or at least reduce the amount of) particles flowing further into the engine 100. Accordingly, the inlet particle separator 150 can ameliorate problems that particles would otherwise cause the engine 100, such as particles plugging secondary flow lines, particles melting and forming glass on relatively hot engine components, particles decreasing core pressure loss, or particles otherwise reducing engine performance.

Specifically, the inlet particle separator 150 may cause air containing such particles to be directed toward the scavenge flow path 222 and cleaner air (i.e., air that contains less particulate) to be directed toward the engine flow path 224. Due to inertia, relatively larger (e.g., >80 microns) entrained particles may tend to collect adjacent the shroud section 202, and may thus flow with the scavenge air 154 into the scavenge flow path 222. As previously noted, the scavenge air 154 is drawn into the scavenge scroll 156 via the air pump 158 and is then discharged into the atmosphere. The compressor inlet air 152, which has none (or at least very few) relatively large particles entrained therein, flows downstream into the engine flow path 224, and ultimately into the compressor section 102 (not depicted in FIG. 2).

In some instances, relatively small entrained particles (e.g., <80 microns) may flow with the compressor inlet air 152 into the engine flow path 224, and thus be ingested into the engine. To prevent, or at least inhibit, a large portion of the relatively small particles from flowing into the compressor section 102, the depicted inlet particle separator system 150 includes the pre-cleaner passage 213.

In some embodiments, the air pump 158 (FIG. 1) may provide suction to the pre-cleaner passage 213 as well as to the scavenge flow path 222. In other embodiments that will be discussed, the pre-cleaner passage 213 may include a dedicated air pump that pumps air through the passage 213, and the air pump 158 may separately pump air through the scavenge flow path 222.

As mentioned above, the pre-cleaner passage 213 may include a pre-cleaner inlet 220. The pre-cleaner inlet 220 may be defined by an upstream surface 226 and the upstream lip 209 of the intermediate portion 216 of the hub section 204. The upstream surface 226 may face in an upstream direction substantially toward the air inlet 212. In some embodiments, for example, the upstream surface 226 may extend in a direction that is transverse to the longitudinal axis 160 (e.g., substantially along the radial axis 162 or at a relatively small angle relative to the radial axis 162). Stated differently, the outer surface 205 of the upstream portion 215 of the hub section 204 may extend along (i.e., substantially parallel to) the longitudinal axis 160, and the upstream surface 226 may project outwardly therefrom, substantially along the radial axis 162. In other words, the upstream surface 226 may be disposed at an angle 228 relative to the longitudinal axis 160. In some embodiments, the angle 228 may be at least eighty degrees (80°) relative to the longitudinal axis 160. In additional embodiments, the angle 228 may be between approximately eighty degrees (80°) and one hundred twenty degrees (120°) relative to the longitudinal axis 160.

Furthermore, the hub section 204 may include a transition surface 227 between the outer surface of the upstream portion 215 of the hub section 204 and the upstream surface 226. Moving in the downstream direction along the longitudinal axis 160, the diameter of the transition surface 227 may gradually increase and may have a predetermined radius. In some embodiments, the contoured transition surface 227 may occupy between approximately ten and fifty percent (10%-50%) of the width 232 of the inlet 230, measured along the radial axis 162.

Also, the upstream surface 226 may be spaced apart from the lip 209 along the longitudinal axis 160. The lip 209 may also curve slightly in an inboard direction along the radial axis 162 toward the upstream portion 215 of the hub section 204. Accordingly, air that travels along the outer surface 205 of the hub section 204 can be re-directed by the transition surface 227 and the upstream surface 226 and directed into the pre-cleaner passage 213 by the lip 209.

Moreover, as shown in the cross section of FIG. 2, the pre-cleaner inlet 220 may have a relatively large width 230, especially in relation to the width 232 of the air inlet 212. More specifically, the width 230 of the pre-cleaner inlet 220 may be measured along the radial axis 162, from the upstream lip 209 to the outer surface 205 of the upstream portion 215 of the hub section 204. In contrast, the width 232 of the air inlet 212 may be measured along the radial direction 162, from the inner surface 203 of the shroud section 202 to the outer surface 205 of the upstream portion 215 of the hub section 204. In some embodiments, the width 230 of the pre-cleaner inlet 220 may be at least half of the width 232 of the air inlet 212.

Accordingly, as air 207 flows through the inlet 212 along the longitudinal axis 160, a predetermined portion of the air 207 enters the pre-cleaner passage 213 (indicated as air 240 in FIG. 2), depending on the amount of suction applied to the pre-cleaner passage 213. The remaining air undergoes a large change in flow direction to continue along the main passage 210. This large change in flow direction causes more relatively fine particles from inlet air 207 to gather near the hub 205 and be captured by the pre-cleaner passageway 220 as part of air 240.

The air 240 flowing into the pre-cleaner passage 213, while initially flowing along the longitudinal axis 160, is re-directed in another direction by the upstream surface 226 of the pre-cleaner inlet 220. Stated differently, the upstream surface 226 may re-direct flow of the air 240 in a direction that is transverse to the longitudinal axis 160. Specifically, this air may be re-directed outwardly substantially along the radial axis 162 as it flows further into the pre-cleaner passage 213. The upstream surface 226 may re-direct flow generally toward an inner diameter surface 225 of the intermediate portion 216 of the hub section 204. More specifically, as air flows along the longitudinal axis 160, the upstream surface 226 re-directs the flow substantially along a vector corresponding to the angle 228.

The pre-cleaner passage 213 may also include a longitudinal segment 234, which extends from the pre-cleaner inlet 220 substantially along the longitudinal axis 160. Additionally, the pre-cleaner passage 213 may include a radial segment 236, which extends from the longitudinal segment 234 inwardly and substantially along the radial axis 162. In some embodiments, the cross sectional area of the pre-cleaner passage reduces from the pre-cleaner inlet 220 to the radial segment 236.

The pre-cleaner passage 213 may include an outlet 238. The outlet 238 is partially shown in FIG. 2. In some embodiments, the outlet 238 may be fluidly disconnected from the scavenge flow path 222. In other embodiments, the outlet 238 may be fluidly connected to the scavenge flow path 222. For example, in some embodiments, the pre-cleaner passage 213 may extend through a strut, through the splitter 206, to fluidly connect to the scavenge flow path 222 as disclosed in U.S. Patent Application No. 13/961,284, filed on August 7, 2013 and published as U.S. Patent Publication No. 2015/0040535, the disclosure of which is incorporated by reference in its entirety. Other embodiments in which the outlet 238 of the pre-cleaner passage 213 is fluidly connected to the scavenge flow path 222 will be discussed in greater detail below.

Accordingly, the pre-cleaner passage 213 may receive particulate-containing air 240 so that it does not enter the engine flow path 224. More specifically, the relatively large width 230 of the pre-cleaner inlet 220 may allow the pre-cleaner passage 213 to receive air 240 which has undergone a large change in flow direction (i.e., initially flowing substantially along the longitudinal axis 160 and turning such that it flows substantially along the radial axis 162). The air 240 is thus re-directed by the upstream surface 226 through a high degree of curvature to flow through the pre-cleaner passage 213. As the air 240 is re-directed, the inertia of particles therein may cause them to gather nearer the hub section 204. Then, the particles may be captured by the pre-cleaner inlet 220 and may eventually be exhausted from the engine 100.

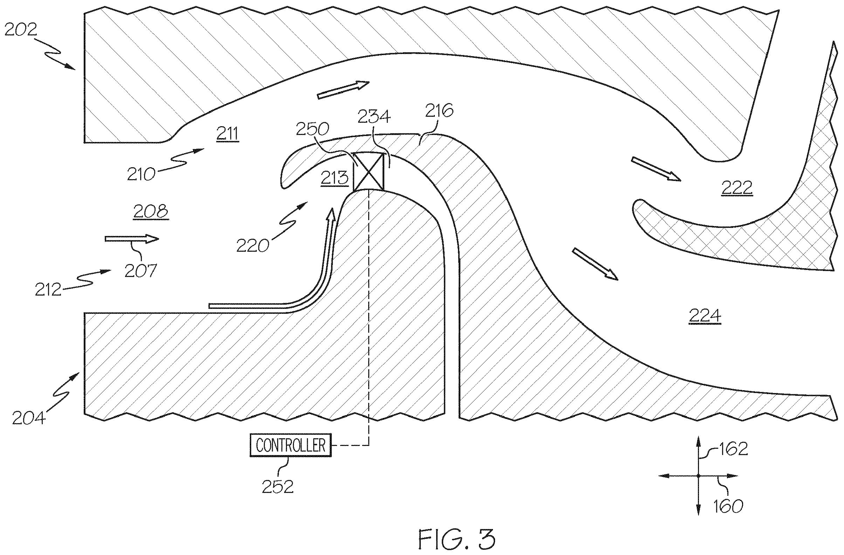

In some embodiments represented in FIG. 3, the pre-cleaner passage 213 may include a flow control member, which is schematically represented and indicated at 250. Generally, the flow control member 250 may be configured for selectively varying the flow through the pre-cleaner passage 213. Although the flow control member 250 is illustrated in FIG. 3 within the longitudinal segment 234, it will be appreciated that the flow control member 250 may be operably coupled to the passage 213 at any suitable location without departing from the scope of the present disclosure.

In some additional embodiments, the flow control member 250 may selectively allow flow through the pre-cleaner passage 213 and, conversely, inhibit flow through the pre-cleaner passage 213. Thus, for example, the flow control member 250 may allow flow through the pre-cleaner passage 213 when the engine 100 operates in an area with a relatively high degree of airborne particulate (e.g., close to the ground, in a dust storm, etc.). In contrast, the flow control member 250 may shut off and prevent flow through the pre-cleaner passage 213 when the engine 100 operates in an area with a relatively low degree of airborne particulate (e.g., at higher elevations, etc.), so that the engine 100 may operate at higher efficiency.

Specifically, in some embodiments, the flow control member 250 may be (or may include) a valve. The valve may have an open position, allowing flow through the pre-cleaner passage 213. The valve may also have a closed position, preventing flow through the pre-cleaner passage 213. Additionally, the valve may have one or more intermediate positions between the open and closed positions. In some embodiments, the valve may be manually opened and closed. In other embodiments, the valve may be automatically moved between the open and closed positions and may be operatively coupled to a controller 252.

The controller 252 may be a computerized device that may generate and send control signals (e.g., to an actuator) for opening and closing the valve. The controller 252 may also include any hardware, software, firmware, electronic control component, processing logic, and/or processor device, individually or in any combination, including without limitation: application specific integrated circuit (ASIC), an electronic circuit, a processor (shared, dedicated, or group) and memory that executes one or more software or firmware programs, a combinational logic circuit, and/or other suitable components that provide the described functionality.

In additional embodiments, the flow control member 250 may be an ejector, which selectively blows high-pressure air through the pre-cleaner passage 213. For example, the ejector may be a nozzle that is directed downstream within the pre-cleaner passage 213. At a selected time, the controller 252 may send a control signal, causing the ejector to blow pressurized air into the pre-cleaner passage 213 to entrain additional air through the passage 213, thus increasing the total amount of particle-laden airflow that enters passage 213, or to clean the passage 213 of accumulated particles.

In further embodiments, the flow control member 250 may be an air pump that blows or sucks air through the pre-cleaner passage 213. This air pump may operate independent of the air pump 158 of the scavenge flow path 222 in some embodiments. The controller 252 may send control signals to the air pump for increasing air flow and/or decreasing air flow through the pre-cleaner passage 213.

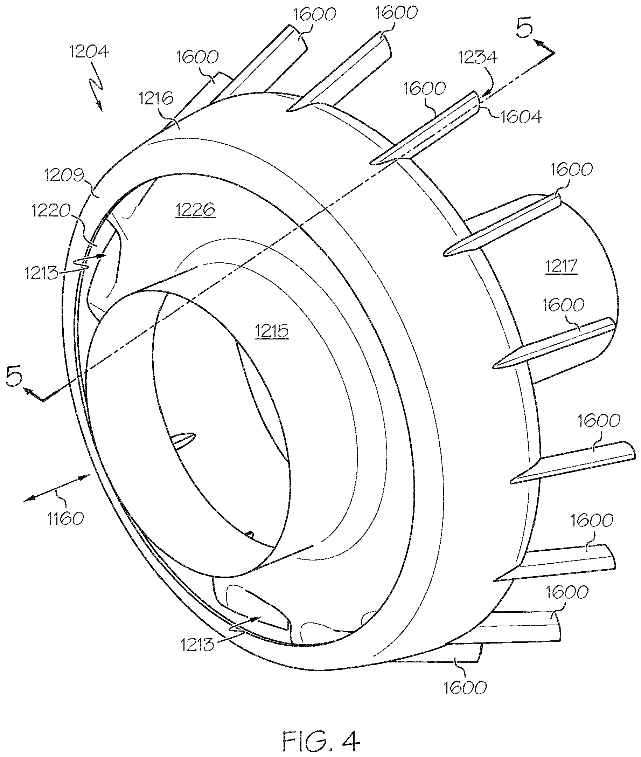

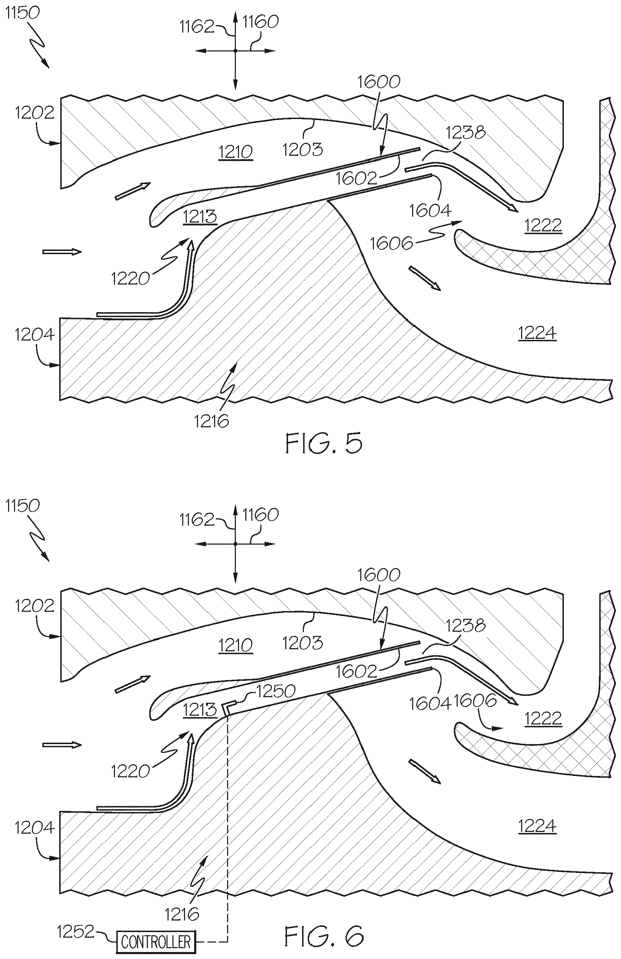

Referring now to FIGS. 4 and 5, additional embodiments of the hub section 1204 and the associated inlet particle separator system 1150 are illustrated according to exemplary embodiments. The embodiments of FIGS. 4 and 5 may be substantially similar to the embodiments discussed above, except as noted. Thus, the embodiments of FIGS. 4 and 5 may include components that correspond with those of FIGS. 1-3. Descriptions of those corresponding components will not be repeated for purposes of brevity. Components that correspond to those of FIGS. 1-3 are indicated with corresponding reference numerals increased by 1000.

As shown in FIG. 4, the hub section 1204 may include a plurality of the pre-cleaner passages 1213. The pre-cleaner passages 1213 may be spaced apart evenly in a circumferential direction about the intermediate portion 1216 of the hub section 1204.

Also, as is most clearly shown in FIG. 4, the hub section 1204 may include a plurality of projecting members 1600. Each of the projecting members 1600 may be operatively coupled to one of the pre-cleaner passages 1213. The projecting members 1600 may project from the intermediate portion 1216 of the hub section 1204. In some embodiments, the projecting members 1600 may project in a downstream direction substantially along the longitudinal axis 1160. In additional embodiments, the projecting members 1600 may project outward, substantially along the radial axis 1162. As will be discussed, the projecting members 1600 may be directed generally toward the shroud 1202 and/or toward the scavenge passage 1222 to direct particles within the projecting member 1600 toward the shroud 1202 and/or scavenge passage 1222.

Each projecting member 1600 may be hollow and tubular so as to include a respective snorkel passage 1602 as shown in FIG. 5. The snorkel passage 1602 may be in fluid communication with the respective pre-cleaner inlet 1220. Moreover, the snorkel passage 1602 may include a downstream end 1604. The downstream end 1604 may define the outlet 1238 of the pre-cleaner passage 1213.

A representative projecting member 1600 is shown in FIG. 5. As shown, the projecting member 1600 may be at least partly disposed within the main passage 1210. Also, the snorkel passage 1602 may be in fluid communication with the scavenge flow path 1222. Thus, particles within the pre-cleaner passage 1213 may flow into the scavenge flow path 1222. Also, because of this configuration, the air pump 158 (FIG. 1) may provide suction to both the pre-cleaner passage 1213 and the scavenge flow path 1222.

In some embodiments, the downstream end 1604 of the snorkel passage 1602 may be proximate an inlet 1606 of the scavenge flow path 1222. Specifically, as shown in FIG. 5, the downstream end 1604 may be spaced apart and disposed upstream relative to the inlet 1606 of the scavenge flow path 1222. The downstream end 1604 may be directed generally toward the concavity of the inner surface 1203 of the shroud section 1202. It will be appreciated that this arrangement may facilitate packaging, manufacturing, and/or assembly of the inlet particle separator system 1150.

In other embodiments that are not specifically illustrated, at least one projecting member 1600 may project through the splitter 1206 and/or the shroud section 1202 such that the downstream end 1604 is in fluid communication with the scavenge flow path 1222. In this example, however, the downstream end 1604 may be disposed upstream of the inlet 1606 of the scavenge flow path 1222.

In additional embodiments represented in FIG. 6, the pre-cleaner passage 1213 may include the flow control member 1250 discussed above with reference to FIG. 3. As stated above, the flow control member 1250 may be configured for selectively varying the flow through the pre-cleaner passage 1213.

In the embodiment of FIG. 6, the flow control member 1250 may be an ejector. The ejector may selectively blow high-pressure air through the pre-cleaner passage 1213. This may increase entrainment of particle-laden air through the passage 1213.

The inlet particle separator systems 150, 1150 described herein may increase the separation efficiency of relatively small particles from engine inlet air without an unreasonable increase in core pressure loss.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the present disclosure in any way. Rather, the foregoing detailed description will provide those skilled in the art with a convenient road map for implementing an exemplary embodiment of the present disclosure. It is understood that various changes may be made in the function and arrangement of elements described in an exemplary embodiment without departing from the scope of the present disclosure as set forth in the appended claims.

## Claims

1. An inlet particle separator system for a vehicle engine comprising:
a shroud section;
a hub section that is at least partly surrounded by the shroud section, the hub section being spaced apart from the shroud section;
a flow passageway with an air inlet defined between the hub section and the shroud section, the flow passageway branching downstream of the air inlet into a main passage and a pre-cleaner passage, the main passage defined between the hub section and the shroud section, the pre-cleaner passage including a pre-cleaner inlet and extending at least partially through the hub section;
a splitter that is disposed within the main passage, downstream of the pre-cleaner inlet, the splitter dividing the main passage into a scavenge flow path and an engine flow path; and
the pre-cleaner inlet partly defined by a first surface of the hub section, the first surface facing in an upstream direction substantially toward the air inlet.

2. The inlet particle separator system of claim 1, wherein the air inlet extends along a longitudinal axis, and wherein the first surface extends transverse to the longitudinal axis.

3. The inlet particle separator system of claim 1, further comprising a flow control member configured to selectively vary flow through the pre-cleaner passage.

4. The inlet particle separator system of claim 3, wherein the flow control member is at least one of an air pump, an ejector, and a valve.

5. The inlet particle separator system of claim 4, wherein the flow control member is a valve having an open position and a closed position;
wherein the valve allows flow through the pre-cleaner passage in the open position; and
wherein the valve substantially prevents flow through the pre-cleaner passage in the closed position.

6. The inlet particle separator of claim 1, wherein the pre-cleaner passage includes a pre-cleaner outlet that is fluidly disconnected from the scavenge flow path.

7. The inlet particle separator of claim 1, wherein the pre-cleaner passage includes a pre-cleaner outlet that is in fluid communication with the scavenge flow path.

8. The inlet particle separator of claim 7, further comprising a projecting member that projects away from the hub section, the projecting member including a snorkel passage that is in fluid communication with the pre-cleaner inlet, the snorkel passage including a downstream end that defines the pre-cleaner outlet.

9. The inlet particle separator of claim 8, wherein the scavenge flow path includes a scavenge inlet;
wherein the downstream end of the snorkel passage is disposed upstream of the scavenge inlet.

10. The inlet particle separator of claim 1, wherein in a cross section taken through the shroud section and the hub section along a longitudinal axis of the flow passageway:
the air inlet has a first width taken transverse to the longitudinal axis; and
the pre-cleaner inlet has a second width;
wherein the second width is at least half of the first width.

11. An inlet particle separator system for a vehicle engine comprising:
a shroud section;
a hub section that is at least partly surrounded by the shroud section, the hub section being spaced apart from the shroud section;
a flow passageway with an air inlet defined between the hub section and the shroud section, the air inlet directing flow substantially along a first direction, the flow passageway branching downstream of the air inlet into a main passage and a pre-cleaner passage, the main passage defined between the hub section and the shroud section, the pre-cleaner passage extending at least partially through the hub section;
a splitter that is disposed within the main passage, the splitter dividing the main passage into a scavenge flow path and an engine flow path; and
the pre-cleaner passage re-directs flow from the air inlet along a second direction, the second direction being transverse to the first direction.

12. The inlet particle separator system of claim 11, wherein the second direction is disposed at an angle relative to the first direction, the angle being between approximately eighty degrees (80°) and one hundred twenty degrees (120°).

13. The inlet particle separator system of claim 11, further comprising a flow control member configured to selectively vary flow through the pre-cleaner passage.

14. The inlet particle separator of claim 11, wherein the pre-cleaner passage is fluidly disconnected from the scavenge flow path.

15. The inlet particle separator of claim 11, wherein the pre-cleaner passage is in fluid communication with the scavenge flow path.
